# EUROPEAN PATENT SPECIFICATION

(11) **EP 3 344 476 B1**
(45) Date of publication and mention of the grant of the patent: **08.04.2020**
(21) Application number: 16754132.5
(22) Date of filing: 15.08.2016
(51) Int. Cl.: B60C 11/12, B60C 11/03

(54) **TRUCK TIRE TREAD AND TRUCK TIRE**
LASTWAGENREIFENLAUFFLÄCHE UND LASTWAGENREIFEN
BANDE DE ROULEMENT DE PNEU DE CAMION ET PNEU DE CAMION

(30) Priority: 04.09.2015 WO PCT/US2015/048468
(43) Date of publication of application: 11.07.2018
(73) Proprietor: Compagnie Générale des Etablissements Michelin, 63000 Clermont-Ferrand (FR)
(72) Inventor: ZHU, Fang, Greenville, SC 29605 (US); VOSS, Stefan, Greenville, SC 29605 (US); ABAROTIN, Victor, Greenville, SC 29605 (US)
(74) Representative: Casalonga
(86) International application number: PCT/US2016/046976
(87) International publication number: WO 2017/040007

(56) References cited:
- WO-A1-2010/030276
- WO-A1-2015/114128
- FR-A1- 2 940 185
- FR-A1- 2 995 253

## Description

### BACKGROUND OF THE INVENTION

### Field of the Invention

This invention relates generally to a tire tread as e.g. known from WO2010030276A1, FR2940185A1, FR2995253A1, or WO2015114128A1. More specifically, this invention relates to tire treads for heavy trucks, in particular tire treads for free-rolling wheels thereof (so called steer positions and trailer positions), especially tire treads for steer positions.

### Description of the Related Art

Tire treads generally extend about the outer circumference of a tire to operate as the intermediary between the tire and a surface upon which it travels (the operating surface). Contact between the tire tread and the operating surface occurs along a footprint of the tire. Tire treads provide grip to resist tire slip that may result during tire acceleration, braking, and/or cornering. Tire treads may also include tread elements, such as ribs or lugs, and tread features, such as grooves and sipes, each of which may assist in providing target tire performance when a tire is operating under particular conditions. The tread pattern generally includes repetitions of identical sub-patterns, the length of such sub-pattern being referred to as the "pitch". Each rib (seen in isolation) may have its own pitch and this pitch may be different from the pitch of the full tread including all tread elements and features.

One common problem faced by tire manufacturers is how to increase the wear resistance.

A solution is to increase the ratio of the tread surface being in contact with the operating surface. This ratio is known as the Contact Surface Ratio (CSR). Increasing the CSR is known to be beneficial for wear life. However, increasing the CSR is also known for harming the wet braking adherence performance of the tread. Wet braking adherence performance is a very important element that must not only be obtained with an unworn tread but also throughout the useful life of the tread as it progressively wears out.

Irregular wear is also a great concern as it can provoke vibrations becoming sensible by the driver in the steering wheel or produce a poor looking wear pattern, both of which leading to the tire being often removed from service at an early stage of its wear life.

Therefore, to further increase the wear performance of tires it may be desirous to propose a novel way to design a tire tread that would not result in compromising its wet braking performance or its resistance to irregular wear.

### SUMMARY OF THE INVENTION

The invention provides for a heavy truck tire tread having a longitudinal direction, a lateral direction and a thickness direction, said tread having a ground-engaging contact surface and comprising at least four main longitudinal grooves defining at least five main longitudinal ribs, the at least four main longitudinal grooves comprising at least one and not more than three open grooves and at least two partially hidden grooves, each of said at least two partially hidden grooves comprising openings to the ground-engaging contact surface and an undersurface channel that is connected to the openings by ducts extending substantially in the thickness direction, longitudinal sipes extending substantially along the longitudinal direction connecting successive openings to the channel, said tread comprising at least two non-shoulder main ribs, said at least two non-shoulder main ribs comprising lateral sipes extending in the lateral direction, the tread comprising at least 120 of said lateral sipes, wherein for each partially hidden groove:
- a total surface area of all openings is less than 200 cm²;
- an average height of said channel is greater than 5 mm; and
- an average section area of said channel is greater than 15 mm².

Preferably, the total surface area of all openings is less than 100 cm².

Preferably, the average section area of all ducts having a mean section area of at least 5 mm² is less than 100 mm².

Preferably, the ratio between an average height of said lateral sipes and a tread depth is greater than 0.33.

Preferably, the ratio between the average height of said lateral sipes and the tread depth is greater than 0.5 and wherein the tread comprises at least 300 of said lateral sipes.

Preferably, the ratio between the average section area of all said ducts having a mean section area of at least 5 mm² and the average section area of the longitudinal channel is less than 1.

Preferably, each partially hidden groove comprises at least 100 openings to the ground-engaging contact surface (more preferably, at least 200).

Preferably, said lateral sipes are connected to the ducts.

Preferably, each of said ducts has at least one lateral edge sipes.

Preferably, said longitudinal sipes are undulated along the longitudinal direction of the tread.

Preferably, said lateral sipes are undulated along the lateral direction of the tread.

Preferably, said lateral and longitudinal sipes are undulated along the thickness direction of the tread.

Preferably, the tread pattern is directional.

Preferably, said lateral sipes are inclined relative to the lateral direction.

Preferably, said lateral sipes are inclined relative to the thickness direction.

The invention also provides for a heavy truck tire comprising such a tread.

The foregoing and other objects, features and advantages of the invention will be apparent from the following more detailed descriptions of a particular embodiment of the invention.

### BRIEF DESCRIPTION OF THE DRAWINGS

FIG. **1** is a front view of a heavy truck tire comprising an embodiment of the disclosed tire tread.
FIG. **2** is a perspective view of the heavy truck tire of FIG. **1**.
FIG. **3** is a front view of part of the tread of FIG. **1** and **2** showing details of its design at a much bigger scale.
FIG. **4** is a section view of the tread taken along curved line **A-A** on FIG. **3** showing other details of its design.
FIG. **5** is a magnified view of a detail **D** taken form FIG. **4**.

### DETAILED DESCRIPTION OF A PARTICULAR EMBODIMENT

Reference will now be made in detail to an embodiment of the invention, example of which is illustrated in the drawings. This example is provided by way of explanation of the invention.

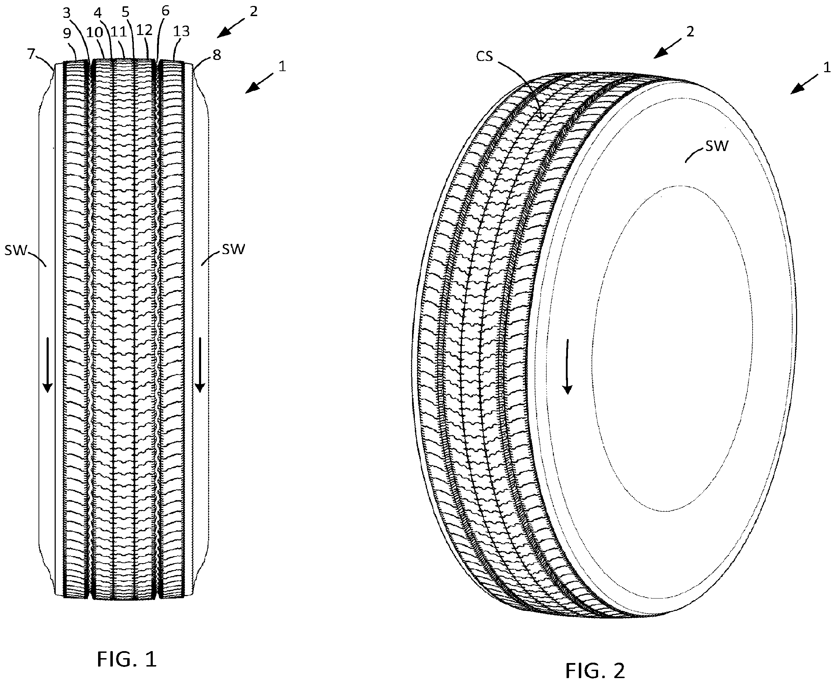

As shown in FIG. **1** and **2**, a heavy truck tire **1** comprises a tread **2** according to an embodiment of the invention.

The tread **2** has a contact surface **CS** for engaging the operating surface on which the tire is rolling and the tire has sidewalls **SW.**

The tread has a longitudinal direction (also referred to as the circumferential direction), a lateral direction (also referred to as the axial or transverse direction) and a thickness direction (also referred to as the tread depth direction).

The tread has four main longitudinal grooves **3**, **4**, **5** and **6** going continuously around the circumference of the tire. Between tread shoulders **7** and **8**, the four main longitudinal grooves define five main ribs **9**, **10**, **11**, **12** and **13**.

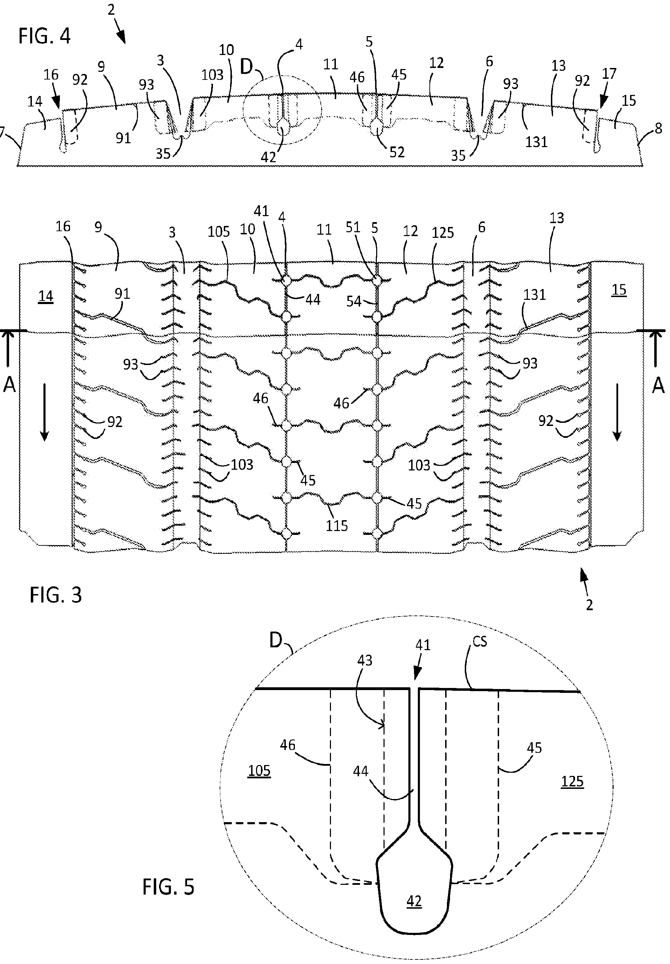

As better visible form the section view of FIG. **4**, the tread may also include sacrificial ribs **14** and **15** defined respectively next to the shoulders **7** and **8** by sacrificial grooves **16** and **17.** Compared to main ribs, sacrificial ribs are much thinner and their contact surface is offset to a lower radius. Sacrificial ribs have been used for years in heavy truck tires, especially for long haul steer axle application, to combat irregular wear; they are not providing a significant effect on the traction or braking performances of the tire.

The main grooves **3** and **6** closest to the tread shoulders will now be referred to as the "shoulder grooves". The main grooves **4** and **5** located in the center of the tread will now be referred to as the "intermediate grooves".

The main ribs **9** and **13** between shoulders and shoulder grooves will now be referred to as the "shoulder ribs". The main ribs **10** and **12** between shoulder grooves and intermediate grooves will now be referred to as the "intermediate ribs". The rib **11** between the two intermediate grooves **4** and **5** will now be referred to as the "center rib". In a tread having six main ribs (and not five as in the described embodiment), there would be two center ribs, one on either side of a center groove.

As better visible on the combination of FIG. **3** and **4** which are showing a portion of the disclosed tread **2** at a much bigger scale, the main grooves **3**, **4**, **5** and **6** are either open grooves or partially hidden grooves. A partially hidden groove is a groove which is not fully visible because openings alternate with portions where only a narrow cut is connecting an undersurface channel to the contact surface of the tread. Narrow cuts in tread are referred to as "sipes". Compared to an open groove, a partially hidden groove allows for a greater contact surface area but is still able to efficiently convey water out of the contact patch when the tire is rolling on a wet ground.

According to the invention, the tread has at least one and not more than three open grooves and at least two partially hidden grooves.

In an embodiment of the invention and as represented in the drawings, the two shoulder grooves **3** and **6** are open grooves and the two intermediate grooves **4** and **5** are partially hidden grooves.

In the partially hidden grooves **4** and **5**, openings **41** and **51** in the contact surface **CS** connect respectively with undersurface channels **42** and **52** via ducts **43** extending in the thickness direction of the tread.

It is apparent especially from FIGS. **4** and **5**, that at a point in the wear life of the tread, the tread will have worn to an extent that the channels emerge at the contact surface and provide additional open grooves.

In the embodiment of FIGS. **1** to **5**, the ducts have a generally cylindrical shape. In this embodiment, the openings have a diameter of 4 mm (section area of 12.6 mm²) and there are 240 of them for each intermediate groove in this embodiment of the invention. The total surface area of the openings is therefore as low as 60.3 cm².

The undersurface channels **42** and **52** are 5 mm wide and 7 mm high in average, their average section area being 31 mm².

In this embodiment, the section area of the ducts is much smaller than the section area of the channels, the ratio between the section area of the ducts and the section area of the longitudinal channel is about 0.4. If the ducts have variable sections along their length and different sizes between, this ratio must be calculated using the average section area of those ducts having a mean section area of at least 5 mm², excluding smaller ones from the average. Similarly if the channel has a variable section area along its length, it has to be averaged over its full length.

The drawings showing only one embodiment with cylindrical ducts, it is understood that ducts may have a different size or shape (the openings being for instance substantially rectangular with the longer side in the longitudinal direction) and the ducts may be in a different number. For instance, another embodiment of the invention would have a lower number of ducts, the ducts having a greater section area.

Longitudinal sipes **44** and **54** connect their respective channel and ducts to the contact surface **CS** as best visible from FIG. **5****.** Those sipes may be straight as shown by the section view or they may be undulated along the thickness direction of the tread in order for both sides of the sipe to interlock when the tread rubber is being compressed in the tire contact patch.

The intermediate ribs **10** and **12** have lateral sipes **105** and **125** extending across them. Those sipes may be more or less high but preferably (as shown in dotted lines on FIG. **4** and **5**) their height is comparable to the length of the ducts **43** on which they connect.

The ratio between the average height of said lateral sipes and the tread depth is about 0.65 in this embodiment. There are 120 lateral sipes for each intermediate rib in this embodiment.

As shown on FIG. **3****,** seen from above the contact surface, the lateral sipes are inclined from the lateral direction. This inclination angle is between 10° and 40°, for instance 25° as shown here when considering where the lateral sipes intersect the edges of the intermediate ribs on the contact surface. In this embodiment, the lateral sipes undulate along their length.

The center rib **11** also has similar lateral sipes **115** and in the same number as in an intermediate rib. Those sipes are not inclined relative to the lateral direction in order for the tread to keep a substantially symmetric pattern. The full tread has therefore a total of 360 lateral sipes.

The shoulder ribs **9** and **13** may have engravings **91** and **131.** Those engravings are preferably very shallow to keep the shoulder ribs as solid as possible.

Narrow lateral edge sipes (so-called micro-sipes) **92**, **93**, **103** are molded along both edges of the shoulder ribs **9** and **13** and on the facing edges of the intermediate ribs **10** and **12.** Similar lateral edge sipes **45** and **46** are connected to the ducts **43.**

Starting from the contact surface **CS**, lateral sipes and micro-sipes may be inclined by a small angle from the tread thickness direction toward the entrance of the footprint (that is to say in the rotation direction of the tire, see arrows on the shoulders of the tread). This angle is between 5° and 25°, for instance 12°.

As visible on FIG. **4**, the bottom of the open grooves is protected by stone ejectors **35.** Stone ejectors may also be provided at the bottom of the channels in their open sections (where the ducts connect to the channel).

As visible on the drawings, the tread pattern is directional, meaning that the tire has to be mounted in a given direction to perform consistently. The preferred rolling direction is generally indicated by arrows molded on the shoulders of the tread.

It should be understood from the foregoing description that various modifications and changes may be made to the embodiments of the present invention. The foregoing description is provided for the purpose of illustration only and should not be construed in a limiting sense. Only the language of the following claims limits the scope of this invention.

## Claims

1. A heavy truck tire tread (1) having a longitudinal direction, a lateral direction and a thickness direction, said tread having a ground-engaging contact surface (CS) and comprising at least four main longitudinal grooves (3, 4, 5, 6) defining at least five main longitudinal ribs (9, 10, 11, 12, 13), the at least four main longitudinal grooves comprising at least one and not more than three open grooves (3, 6) and at least two partially hidden grooves (4, 5), each of said at least two partially hidden grooves comprising openings (41, 51) to the ground-engaging contact surface and an undersurface channel (42, 52) that is connected to the openings by ducts (43, 53) extending substantially in the thickness direction, longitudinal sipes (44, 54) extending substantially along the longitudinal direction connecting successive openings to the channel, said tread comprising at least two non-shoulder main ribs (10, 11, 12), said at least two non-shoulder main ribs comprising lateral sipes (105, 115, 125) extending in the lateral direction, the tread comprising at least 120 of said lateral sipes,
**characterized in that**
for each partially hidden groove (4, 5) a total surface area of all openings (41, 51) is less than 200 cm2;
an average height of said channel (42, 52) is greater than 5 mm; and
an average section area of said channel (42, 52) is greater than 15 mm².

2. A heavy truck tire tread according to claim 1 wherein the total surface area of all openings (41, 51) is less than 100 cm².

3. A heavy truck tire tread according to any preceding claim wherein the total surface area of all openings (41, 51) is greater than 50 cm².

4. A heavy truck tire tread according to any preceding claim wherein the surface area of each opening (41, 51) is greater than 12.5 mm².

5. A heavy truck tire tread according to any preceding claim having four main longitudinal grooves (3, 4, 5, 6) wherein the two shoulder grooves (3, 6) are open grooves and the two intermediate grooves (4, 5) are partially hidden grooves.

6. A heavy truck tire tread according to any preceding claim wherein the average section area of all ducts (43, 53) having a mean section area of at least 5 mm² is less than 100 mm².

7. A heavy truck tire tread according to any preceding claim wherein the ratio between an average height of said lateral sipes (105, 115, 125) and a tread depth is greater than 0.33.

8. A heavy truck tire tread according to any preceding claim wherein the ratio between the average height of said lateral sipes (105, 115, 125) and the tread depth is greater than 0.5 and wherein the tread comprises at least 300 of said lateral sipes (105, 115, 125).

9. A heavy truck tire tread according to any preceding claim wherein the ratio between the average section area of all said ducts (43, 53) having a mean section area of at least 5 mm² and the average section area of the longitudinal channel (42, 52) is less than 1.

10. A heavy truck tire tread according to claim 9 wherein said ratio is less than 0.5.

11. A heavy truck tire tread according to any preceding claim wherein each partially hidden groove (4, 5) comprises at least 100 openings (41, 51) to the ground-engaging contact surface CS.

12. A heavy truck tire tread according to any preceding claim wherein said lateral sipes (105, 115, 125) are connected to the ducts (43, 53).

13. A heavy truck tire tread according to any preceding claim wherein each of said ducts (43, 53) has at least one lateral edge sipe (45).

14. A heavy truck tire tread according to any preceding claim wherein said longitudinal sipes (44, 54) are undulated along the longitudinal direction of the tread.

15. A heavy truck tire tread according to any preceding claim wherein said lateral sipes (105, 115, 125) are undulated along the lateral direction of the tread.

16. A heavy truck tire tread according to any preceding claim wherein said lateral (105, 115, 125) and longitudinal (44, 54) sipes are undulated along the thickness direction of the tread.

17. A heavy truck tire tread according to any preceding claim wherein the tread pattern is directional.

18. A heavy truck tire tread according to any preceding claim wherein said lateral sipes (105, 115, 125) are inclined relative to the lateral direction.

19. A heavy truck tire tread according to any preceding claim wherein said lateral sipes (105, 115, 125) are inclined relative to the thickness direction.

20. A heavy truck tire comprising a tread according to any preceding claim.

## Patentansprüche

1. Schwerlastwagenreifenlauffläche (1) mit einer Längsrichtung, einer Querrichtung und einer Dickenrichtung, wobei die Lauffläche eine mit dem Boden in Kontakt stehende Kontaktfläche (CS) aufweist und mindestens vier Hauptlängsnuten (3, 4, 5, 6) umfasst, die mindestens fünf Hauptlängsrippen (9, 10, 11, 12, 13) definieren, wobei die mindestens vier Hauptlängsnuten mindestens eine und nicht mehr als drei offene Nuten (3, 6) und mindestens zwei teilweise verborgene Nuten (4, 5) umfassen, wobei jede der mindestens zwei teilweise verborgenen Nuten Öffnungen (41, 51) zur Kontaktfläche mit dem Boden und einen Kanal (42, 52) an der Unterseite umfasst, der mit den Öffnungen durch Kanäle (43, 53) verbunden ist, die sich im Wesentlichen in der Richtung der Dicke erstrecken, wobei sich Längslamellen (44, 54) im Wesentlichen in der Längsrichtung erstrecken und aufeinanderfolgende Öffnungen mit dem Kanal verbinden, wobei die Lauffläche mindestens zwei schulterfreie Hauptrippen (10, 11, 12) umfasst, wobei die mindestens zwei schulterfreien Hauptrippen seitliche Lamellen (105, 115, 125) umfassen, die sich in der seitlichen Richtung erstrecken, wobei die Lauffläche mindestens 120 der seitlichen Lamellen umfasst,
**dadurch gekennzeichnet, dass**
für jede teilweise verdeckte Nut (4, 5) eine Gesamtoberfläche aller Öffnungen (41, 51) kleiner als 200 cm² ist;
eine durchschnittliche Höhe des Kanals (42, 52) größer als 5 mm ist; und
eine durchschnittliche Querschnittsfläche des Kanals (42, 52) größer als 15 mm² ist.

2. Schwerlastwagenreifenlauffläche nach Anspruch 1, wobei die Gesamtfläche aller Öffnungen (41, 51) weniger als 100 cm² beträgt.

3. Schwerlastwagenreifenlauffläche nach einem der vorherigen Ansprüche, wobei die Gesamtfläche aller Öffnungen (41, 51) größer als 50 cm² ist.

4. Schwerlastwagenreifenlauffläche nach einem der vorherigen Ansprüche, wobei die Fläche jeder Öffnung (41, 51) größer als 12,5 mm² ist.

5. Schwerlastwagenreifenlauffläche nach einem der vorherigen Ansprüche mit vier Hauptlängsnuten (3, 4, 5, 6), wobei die beiden Schulternuten (3, 6) offene Nuten und die beiden Zwischennuten (4, 5) teilweise verdeckte Nuten sind.

6. Schwerlastwagenreifenlauffläche nach einem der vorherigen Ansprüche, wobei die durchschnittliche Querschnittsfläche aller Kanäle (43, 53) mit einer mittleren Querschnittsfläche von mindestens 5 mm² weniger als 100 mm² beträgt.

7. Schwerlastwagenreifenlauffläche nach einem der vorherigen Ansprüche, wobei das Verhältnis zwischen einer durchschnittlichen Höhe der seitlichen Lamellen (105, 115, 125) und einer Profiltiefe größer als 0,33 ist.

8. Schwerlastwagenreifenlauffläche nach einem der vorherigen Ansprüche, wobei das Verhältnis zwischen der durchschnittlichen Höhe der seitlichen Lamellen (105, 115, 125) und der Profiltiefe größer als 0,5 ist und wobei die Lauffläche mindestens 300 der seitlichen Lamellen (105, 115, 125) umfasst.

9. Schwerlastwagenreifenlauffläche nach einem der vorherigen Ansprüche, wobei das Verhältnis zwischen der mittleren Querschnittsfläche aller Kanäle (43, 53) mit einer mittleren Querschnittsfläche von mindestens 5 mm² und der mittleren Querschnittsfläche des Längskanals (42, 52) weniger als 1 beträgt.

10. Schwerlastwagenreifenlauffläche nach Anspruch 9, wobei dieses Verhältnis weniger als 0,5 beträgt.

11. Schwerlastwagenreifenlauffläche nach einem der vorherigen Ansprüche, wobei jede teilweise verborgene Nut (4, 5) mindestens 100 Öffnungen (41, 51) zu der den Boden berührenden Kontaktfläche CS aufweist.

12. Schwerlastwagenreifenlauffläche nach einem der vorherigen Ansprüche, wobei die seitlichen Lamellen (105, 115, 125) mit den Kanälen (43, 53) verbunden sind.

13. Schwerlastwagenreifenlauffläche nach einem der vorherigen Ansprüche, wobei jeder der genannten Kanäle (43, 53) mindestens eine Seitenkantenlamelle (45) aufweist.

14. Schwerlastwagenreifenlauffläche nach einem der vorherigen Ansprüche, wobei die Längslamellen (44, 54) entlang der Längsrichtung der Lauffläche gewellt sind.

15. Schwerlastwagenreifenlauffläche nach einem der vorhergehenden Ansprüche, wobei die seitlichen Lamellen (105, 115, 125) entlang der seitlichen Richtung der Lauffläche gewellt sind.

16. Schwerlastwagenreifenlauffläche nach einem der vorherigen Ansprüche, wobei die seitlichen (105, 115, 125) und länglichen (44, 54) Lamellen entlang der Dickenrichtung der Lauffläche gewellt sind.

17. Schwerlastwagenreifenlauffläche nach einem der vorherigen Ansprüche, wobei das Laufflächenprofil laufrichtungsgebunden ist.

18. Schwerlastwagenreifenlauffläche nach einem der vorherigen Ansprüche, wobei die seitlichen Lamellen (105, 115, 125) relativ zur Querrichtung geneigt sind.

19. Schwerlastwagenreifenlauffläche nach einem der vorherigen Ansprüche, wobei die seitlichen Lamellen (105, 115, 125) relativ zur Dickenrichtung geneigt sind.

20. Schwerlastwagenreifen, der eine Lauffläche nach einem der vorherigen Ansprüche aufweist.

## Revendications

1. Bande de roulement de pneumatique de camion lourd (1) ayant une direction longitudinale, une direction latérale et une direction d'épaisseur, ladite bande de roulement ayant une surface de contact avec le sol (CS) et comprenant au moins quatre rainures longitudinales principales (3, 4, 5, 6) définissant au moins cinq nervures longitudinales principales (9, 10, 11, 12, 13), les au moins quatre rainures longitudinales principales comprenant au moins une et pas plus de trois rainures ouvertes (3, 6) et au moins deux rainures en partie cachées (4, 5), chacune desdites au moins deux rainures en partie cachées comprenant des ouvertures (41, 51) vers la surface de contact avec le sol et un canal (42, 52) de sous-surface qui est relié aux ouvertures par des conduits (43, 53) s'étendant sensiblement dans la direction d'épaisseur, des lamelles longitudinales (44, 54) s'étendant sensiblement le long de la direction longitudinale reliant des ouvertures successives vers le canal, ladite bande de roulement comprenant au moins deux nervures principales ne formant pas d'épaulement (10, 11, 12), lesdites au moins deux nervures principales ne formant pas d'épaulement comprenant des lamelles latérales (105, 115, 125) s'étendant dans la direction latérale, la bande de roulement comprenant au moins 120 desdites lamelles latérales,
**caractérisée en ce que**
pour chaque rainure en partie cachée (4, 5) une aire de surface totale de toutes les ouvertures (41, 51) est inférieure à 200 cm² ;
une hauteur moyenne dudit canal (42, 52) est supérieure à 5 mm ; et
une aire de section moyenne dudit canal (42, 52) est supérieure à 15 mm².

2. Bande de roulement de pneumatique de camion lourd selon la revendication 1 dans laquelle l'aire de surface totale de toutes les ouvertures (41, 51) est inférieure à 100 cm².

3. Bande de roulement de pneumatique de camion lourd selon l'une quelconque des revendications précédentes dans laquelle l'aire de surface totale de toutes les ouvertures (41, 51) est supérieure à 50 cm².

4. Bande de roulement de pneumatique de camion lourd selon l'une quelconque des revendications précédentes dans laquelle l'aire de surface de chaque ouverture (41, 51) est supérieure à 12,5 mm².

5. Bande de roulement de pneumatique de camion lourd selon l'une quelconque des revendications précédentes ayant quatre rainures longitudinales principales (3, 4, 5, 6) dans laquelle les deux rainures d'épaulement (3, 6) sont des rainures ouvertes et les deux rainures intermédiaires (4, 5) sont des rainures en partie cachées.

6. Bande de roulement de pneumatique de camion lourd selon l'une quelconque des revendications précédentes dans laquelle l'aire de section moyenne de tous les conduits (43, 53) ayant une aire de section moyenne d'au moins 5 mm² est inférieure à 100 mm².

7. Bande de roulement de pneumatique de camion lourd selon l'une quelconque des revendications précédentes dans laquelle le rapport entre une hauteur moyenne desdites lamelles latérales (105, 115, 125) et une profondeur de bande de roulement est supérieur à 0,33.

8. Bande de roulement de pneumatique de camion lourd selon l'une quelconque des revendications précédentes dans laquelle le rapport entre la hauteur moyenne desdites lamelles latérales (105, 115, 125) et la profondeur de bande de roulement est supérieur à 0,5 et dans laquelle la bande de roulement comprend au moins 300 desdites lamelles latérales (105, 115, 125).

9. Bande de roulement de pneumatique de camion lourd selon l'une quelconque des revendications précédentes dans laquelle le rapporte entre l'aire de section moyenne de tous lesdits conduits (43, 53) ayant une aire de section moyenne d'au moins 5 mm² et l'aire de section moyenne du canal (42, 52) longitudinal est inférieur à 1.

10. Bande de roulement de pneumatique de camion lourd selon la revendication 9 dans laquelle ledit rapport est inférieur à 0,5.

11. Bande de roulement de pneumatique de camion lourd selon l'une quelconque des revendications précédentes dans laquelle chaque rainure en partie cachée (4, 5) comprend au moins 100 ouvertures (41, 51) vers la surface de contact avec le sol CS.

12. Bande de roulement de pneumatique de camion lourd selon l'une quelconque des revendications précédentes dans laquelle lesdites lamelles latérales (105, 115, 125) sont reliées aux conduits (43, 53).

13. Bande de roulement de pneumatique de camion lourd selon l'une quelconque des revendications précédentes dans laquelle chacun desdits conduits (43, 53) a au moins une lamelle de bord latéral (45).

14. Bande de roulement de pneumatique de camion lourd selon l'une quelconque des revendications précédentes dans laquelle lesdites lamelles longitudinales (44, 54) sont ondulées le long de la direction longitudinale de la bande de roulement.

15. Bande de roulement de pneumatique de camion lourd selon l'une quelconque des revendications précédentes dans laquelle lesdites lamelles latérales (105, 115, 125) sont ondulées le long de la direction latérale de la bande de roulement.

16. Bande de roulement de pneumatique de camion lourd selon l'une quelconque des revendications précédentes dans laquelle lesdites lamelles latérales (105, 115, 125) et longitudinales (44, 54) sont ondulées le long de la direction d'épaisseur de la bande de roulement.

17. Bande de roulement de pneumatique de camion lourd selon l'une quelconque des revendications précédentes dans laquelle le motif de bande de roulement est directionnel.

18. Bande de roulement de pneumatique de camion lourd selon l'une quelconque des revendications précédentes dans laquelle lesdites lamelles latérales (105, 115, 125) sont inclinées relativement à la direction latérale.

19. Bande de roulement de pneumatique de camion lourd selon l'une quelconque des revendications précédentes dans laquelle lesdites lamelles latérales (105, 115, 125) sont inclinées relativement à la direction d'épaisseur.

20. Pneumatique de camion lourd comprenant une bande de roulement selon l'une quelconque des revendications précédentes.
